Europäisches Patentamt

(19) European Patent Office

Office européen des brevets

(11) EP 0 665 078 B1

## (12) EUROPEAN PATENT SPECIFICATION

(45) Date of publication and mention
of the grant of the patent:
**27.05.1998 Bulletin 1998/22**

(51) Int. Cl.$^6$: **B23H 7/20**

(21) Application number: **95300474.4**

(22) Date of filing: **26.01.1995**

(54) **Method for quality decision of electrical discharge machined work and apparatus for quality decision thereof**

Verfahren zur Entscheidung über die Qualität einer Funkenerosionsbearbeitung und Qualitätentscheidungsvorrichtung

Méthode de décision sur la qualité de l'usinage par électroérosion et appareil de détection de la qualité d'usinage

(84) Designated Contracting States:
**CH DE LI**

(30) Priority: **27.01.1994 JP 23596/94**

(43) Date of publication of application:
**02.08.1995 Bulletin 1995/31**

(73) Proprietor: **FANUC LTD.**
**Minamitsuru-gun, Yamanashi 401-05 (JP)**

(72) Inventor:
**Ogata, Toshiyuki**
**FANUC Dai3virakaramatsu,**
**JP-Yamanashi, 401-05 (JP)**

(74) Representative:
**Billington, Lawrence Emlyn**
**Haseltine Lake & Co.,**
**Imperial House,**
**15-19 Kingsway**
**London WC2B 6UD (GB)**

(56) References cited:
**EP-A- 0 406 918**      **WO-A-94/00265**
**DE-A- 3 933 152**

**Description**

This invention relates to a wire electrical discharge machining method or apparatus, and more particularly to a method of making a quality decision for a machined work, and an apparatus for making the quality decision for the machined work in a wire electrical discharge machining apparatus.

An electrical discharge machining apparatus is provided to machine a work by discharge generated between an electrode and a work. For example, in a wire-cut electrical discharge machining apparatus as one type of electrical discharge machining apparatus , while running a wire electrode (hereinafter referred to as wire), tension is applied to the wire to generate the discharge between the wire and the work so as to realize desired machining to the work. Further, the wire extends along a wire path from a wire supply reel via the work to a wire recovering box, to pass through a wire feed mechanism including a brake roller and a feed roller or the like. Between both the rollers, the tension is applied to the wire by braking force of the brake roller caused against traction of the feed roller.

In the prior art, according to the following method, it is decided whether a work produced by the above electrical discharge machining apparatus is non-defective or defective. That is, a measuring apparatus such as a micrometer is used to measure dimensions of the work which has been machined in reality, and the measured values are compared with predetermined reference values.

However, in the conventional quality decision of the work machined by the wire electrical discharge machining apparatus, there is a problem in that a measuring time and complicated manual operation are required because the electrical discharge machined works should be individually measured. In particular, when vast amounts of works are machined, it is not practical in view of time and efficiency to make a quality decision for all the electrical discharge machined works. Thus, the quality decision can be made for only electrical discharge machined works extracted depending upon a sampling method, and can not be made to almost all the electrical discharge machined works in reality.

In view of the foregoing, it is an object of the present invention to provide a method for quality decision for an electrical discharge machined work, and an apparatus for quality decision thereof, in which the above problem can be overcome which exists in conventional quality decision for an electrical discharge machined work produced by a wire electrical discharge machining apparatus. Preferably, the quality decision can be easily made for the electrical discharge machined work in a wire electrical discharge machining apparatus.

According to the present invention there is provided a method of making quality decision of an electrical discharge machined work formed by a wire electrical discharge machining apparatus. The method includes the steps of storing time-dependent data in machining when a machined work is non-defective, defining the time-dependent data in the machining as a parameter for the quality decision, monitoring, with respect to a machined work requiring the quality decision, data depending upon a machining time required for the same machining as that of the non-defective work, and making the quality decision by comparing the monitored data with the stored time-dependent data in the machining.

Further according to the present invention, there is provided an apparatus for making quality decision of an electrical discharge machined work formed by a wire electrical discharge machining apparatus. The apparatus includes storage means for storing time-dependent data in machining, and comparing means for comparing the time-dependent data in the machining, stored in the storage means, with data depending upon a time required for the same machining of an electrical discharge machined work requiring the quality decision as that of a non-defectively machined work. In the apparatus, the time-dependent data when the machined work is non-defective is stored in the storage means.

In a preferred example, the time-dependent data in the machining can serve as one parameter to make a decision of shape accuracy of the machined work, which varies depending upon various machining conditions in electrical discharge machining, so as to make the quality decision for the machined work. For example, the data may include a machining time and/or a machining speed.

According to the present invention, a work is machined by the electrical discharge machining, and for the quality decision of the machined work, the time-dependent data in machining when a machined work is non-defective is previously stored. The time-dependent data in the machining is defined as a parameter for the quality decision to monitor, with respect to the machined work requiring the quality decision, data depending upon a machining time required for the same machining as that of the non-defective work. Subsequently, the monitored data is compared with the stored time-dependent data in the machining when the machined work is non-defective. Thus, the quality decision of the machined work may be made by identifying whether or not a difference between both data is within a tolerance.

As described above,

there are provided a method for quality decision of the electrical discharge machined work and an apparatus for quality decision thereof, in which it is possible to easily make the quality decision of the electrical discharge machined work in the wire electrical discharge machining apparatus.

The foregoing and other advantages and features of embodiments of the invention will become apparent from the following non-limiting description of preferred embodiments of the invention with reference to the accompanying drawings, in which:

Fig. 1 is a block diagram illustrating an apparatus for quality decision in a wire electrical discharge machining apparatus according to the present invention;

Fig. 2 is a diagram illustrating time-dependent data in machining for quality decision of an electrical discharge machined work according to the present invention;

Fig. 3 is a flowchart of a quality decision of an electrical discharge machined work according to the present invention;

Fig. 4 is a schematic diagram for illustrating a structure of a quality decision result memory according to the present invention;

Fig. 5 is a diagram showing one embodiment of a quality decision result display screen of the quality decision of the electrical discharge machined work according to the present invention;

Fig. 6 is a flowchart of a quality decision of an electrical discharge machined work according to the present invention;

Fig. 7 is a schematic diagram for illustrating a structure of a quality decision result memory according to the present invention;

Fig. 8 is a diagram showing another embodiment of the quality decision result display screen of the quality decision of the electrical discharge machined work according to the present invention; and

Fig. 9 is a diagram for illustrating tolerances according to a preferred example of the present invention.

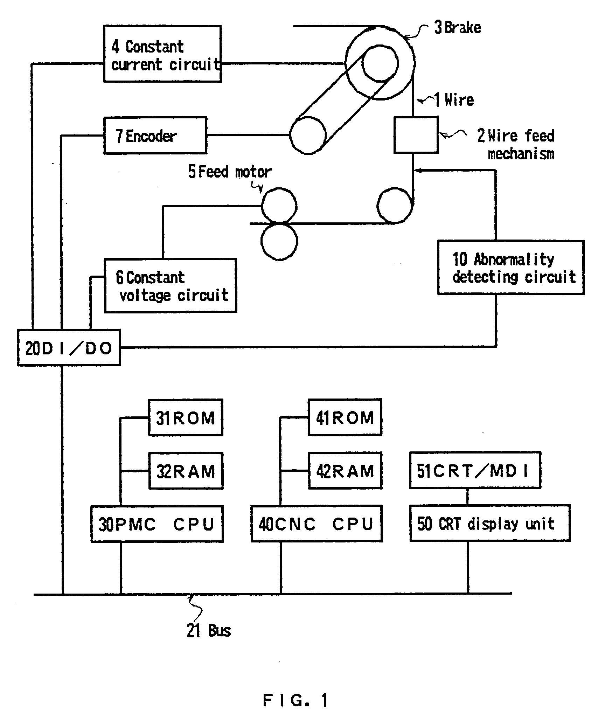

Fig. 1 is a block diagram illustrating an apparatus for quality decision in a wire electrical discharge machining apparatus according to the present invention.

In Fig. 1, in the wire electrical discharge machining apparatus body, a wire 1 is tensed between upper and lower frames (not shown) opposed to each other. The wire 1 is fed from a wire winding unit (not shown) to be wound up by a wire drawing unit (not shown) through a wire feed mechanism 2. A wire feed roller is mounted between the wire winding unit and the wire feed mechanism 2 to control feed of the wire 1 by using a brake 3 which is driven by a constant current circuit 4. An encoder 7 is attached to the wire feed roller to detect an amount of rotation of the wire feed roller so as to measure an amount of wire movement, thereby detecting a position of wire connection trouble or wire disconnection trouble.

Further, the wire drawing unit includes a wire winding roller which is driven to wind up the wire 1 by a feed motor 5 receiving voltage from a constant voltage circuit 6. The wire winding unit and the wire drawing unit constitute wire tensing means.

In the wire electrical discharge machining apparatus, a wire path is divided into a plurality of intervals along the path, and for each interval, there are provided wire abnormality detecting means serving as wire normal state detecting means such as a disconnection detecting portion, a passing wire detecting portion, or a flexed wire detecting portion, for detecting whether or not the wire is in a predetermined normal state. Output from the wire abnormality detecting means is detected by an abnormality detecting circuit 10 whose output is connected to a bus 21 via an input/output circuit 20 (hereinafter referred to as DI/DO). Further, the constant current circuit 4, the constant voltage circuit 6, and the encoder 7 are connected to the DI/DO 20. Thereby, the DI/DO 20 transmits control signals from a CPU to the constant current circuit 4 and the constant voltage circuit 6, and transmits a measured signal from the encoder 7 to the CPU.

In addition to the DI/DO 20, the bus 21 is connected to a CPU 30 serving as a programmable controller (hereinafter referred to as PMC), a CPU 40 serving as a computer numerical control unit (hereinafter referred to as CNC), and a CRT display unit 50. Further, ROMs 31 and 41, and RAMs 32 and 42 are respectively connected to the CPU 30 of the PMC, and the CPU 40 of the CNC. An input/output device (hereinafter CRT/MDI) 51 of CRT is connected to the CRT display unit 50. The CRT display unit 50 can display information about wire machining in various formats, and can display the information on a CRT display according to a display program stored in the ROM 31.

The ROM 31 is used as a program memory containing various programs to control each section of the wire electrical discharge machining apparatus and a wire electrical discharge machining apparatus control unit itself, a program for quality decision and a display program or the like. On the other hand, the RAM 32 is used as a data memory containing position data stored in a machining program, different setting data for setting other machining conditions, and data for quality decision. Further, the RAM 32 is used as a temporary data memory for various types of calculations carried out by the CPU 30, and has a register area to count an output pulse from the encoder 7.

Further, the ROM 41 is used as a program memory of the CNC unit to control a position of a work table. The RAM 42 is used as a data memory containing the position data and so forth stored in the machining program, or is used as a temporary data memory for various types of calculations carried out by the CPU 40.

Though the CRT display unit 50 is shown as a display unit in Fig. 1, it must be noted that display means should not be limited to the CRT display unit, and may include another display unit such as liquid crystal display unit.

In machining by the wire electrical discharge machining apparatus having the above structure, quality decision of a machined work is typically made depending upon shape accuracy of the machined work. For example, the shape accuracy of the machined work may specifically include dimensional accuracy such as uniformity of a machined groove width or accuracy of locus of relative movement between the wire electrode and the machined work, accuracy of straightness in a machined sectional form, roughness of a machined surface, corner shape accuracy at a corner portion and so forth. The shape accuracy is affected by various types of machining conditions such as no-load voltage, on time or off time of servo-voltage, wire tension, wire feeding speed or working fluid resistivity.

The term "no-load voltage" as used herein means electrode-to-electrode voltage applied to the wire, that is, power source voltage when no machining is carried out, and the term "servo-voltage" means reference voltage so that the voltage applied to the wire is constant during machining. The term "off time" means a time interval in which no discharge voltage is applied to the wire 1 during a discharge pulse time of wire discharge, and "on time" is a time interval in which the discharge voltage is applied to the wire 1. The off time and the on time are set according to the machining conditions, and can be found by contents of an instruction from the machining program. Further, the term "wire tension" means tension applied to the wire by the wire tensing means, "wire feeding speed" means a speed of the wire moved by the wire feed mechanism 2 to pass through the work, and "working fluid resistivity" is resistivity of working fluid poured upon the work and the wire at a machined position. The resistivity affects a rate of occurrence of discharge removal and electrolytic removal.

On the other hand, in electrical discharge machining, a characteristic about a time in machining is a machining characteristic which can be used as one indication showing a machining process state. Further, the characteristic is varied according to the machining conditions when the electrical discharge machining is carried out. The shape accuracy of the machined work is varied according to values of the various machining conditions. Therefore, it is possible to represent quality of the shape accuracy by using data about the time in machining as indication instead of using the machining conditions as indication.

Hence, according to the present invention, the quality decision is made for the electrical discharge machined work not by measuring actual dimensions of the machined work or monitoring various machining conditions in the electrical discharge machining as in the prior art, but by monitoring time-dependent data in machining as a parameter for the quality decision during machining process of the machined work.

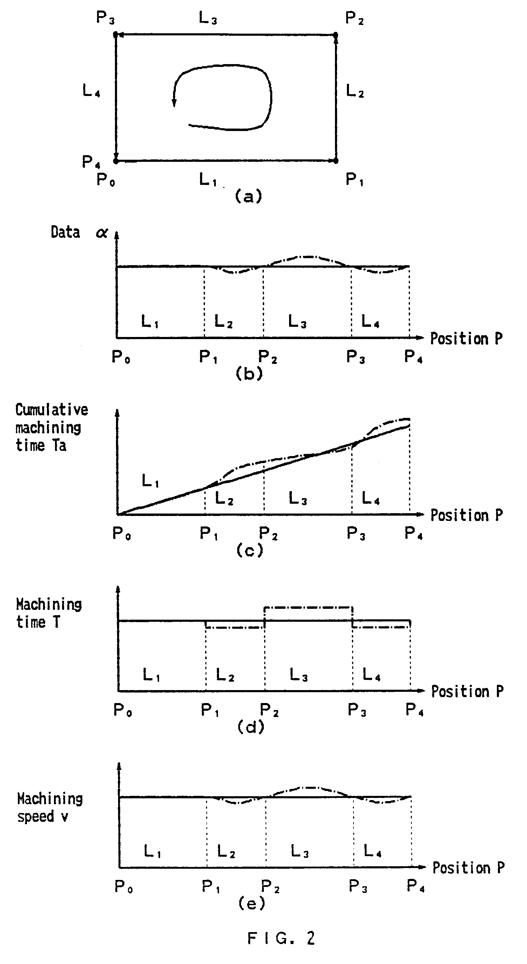

Fig. 2 is a diagram illustrating the time-dependent data in machining for the quality decision of the electrical discharge machined work according to the present invention. Fig. 2(a) shows a machining path in the electrical discharge machined work, and the electrical discharge machining is carried out from a machining start point $P_0$ to a machining end point $P_4$ through machining through-points $P_1$, $P_2$, and $P_3$. In the machining path, an interval $L_1$ is defined between the machining start point $P_0$ to the machining through-point $P_1$, an interval $L_2$ is defined between the machining through-point $P_1$ to the machining through-point $P_2$, an interval $L_3$ is defined between the machining through-point $P_2$ to the machining through-point $P_3$, and an interval $L_4$ is defined between the machining through-point $P_3$ to the machining through-point $P_4$.

In the wire electrical discharge machining apparatus, the machining is carried out by the wire while the work table is driven to move the wire relative to the machined work. In such a manner, the machining requires a machining time according to the machining conditions for each machining interval in the machining path. According to one example of the present invention, the quality decision of the machined work is made by using the time in machining for each machining interval as a parameter for the decision of the shape accuracy of the machined work.

Fig. 2(b) is a diagram showing time-dependent data a in machining in the machining intervals $L_1$ to $L_4$. In Fig. 2(b), the solid line shows one time-dependent data a in machining when a machined work is non-defective, and the one dot chain line shows the other time-dependent data $\alpha$ in machining of the machined work requiring the quality decision. In the drawing, though both the data $\alpha$ are identical in the machining interval $L_1$, there are differences between both the data $\alpha$ in the machining intervals $L_2$ to $L_4$. Thus, the quality decision can be made by comparing the solid line with the one dot chain line to find a difference therebetween. For example, it is possible to make the quality decision by deciding whether or not the difference exceeds a predetermined threshold.

According to preferred examples of the present invention, a machining time and/or a machining speed may be employed as the time-dependent data in the machining for the quality decision.

Therefore, a description will now be given of one case where a machining time T and a machining speed v are used as the time-dependent data in machining, and the data is defined as the parameter for the quality decision.

Fig. 2(c) is a diagram in which the machining time T is used as a parameter depending upon the machining time in the machining intervals $L_1$ to $L_4$ shown in Fig. 2(a). In the drawing, the machining path is taken in an abscissa, and a cumulative machining time Ta from the machining start point is taken in an ordinate. Further, the solid line shows one cumulative machining time Ta when a machined work is non-defective, and one dot chain line shows the other cumulative machining time Ta when the quality decision is made for a machined work. In the drawing, the solid line and one dot chain line describe substantially the same locus in the machining interval $L_1$. This indicates that the one cumulative machining time in case of the non-defective machined work is equal to the other cumulative machining time in case of the machined work requiring the quality decision. On the other hand, different curves are described depending upon both the cumulative machining times in the machining intervals $L_2$ to $L_4$. For example, in the machining interval $L_2$, the machining time in case of the machined work requiring the quality decision is longer than that in case of the non-defective work. Further, in the machining interval $L_3$, the machining time in case of the machined work requiring the quality decision is shorter than that in case of the non-defective work. At the machining end point $P_4$, a final difference between the cumulative machining times are shown.

If the cumulative machining times Ta in Fig. 2(c) are used, the quality decision is made by comparing one cumulative machining time Ta in case of the non-defectively machined work with the other cumulative machining time Ta in case of the machined work requiring the quality decision. The comparison can be made at each position of the machining path, or at the machining end point.

Fig. 2(d) shows another case where a machining time T is used as time-dependent data in machining in the machining intervals $L_1$ to $L_4$ shown in Fig. 2(a). In the drawing, the machining path is taken in an abscissa, and the machining time T whose interval corresponds to each machining interval is taken in an ordinate. Further, the solid line shows one machining time T in case of the non-defectively machined work, and one dot chain line shows the other machining time T in case of the machined work requiring the quality decision. In Fig. 2(d), the machining interval in the machining path is used as the interval indicating the machining time T. However, it is also possible to show the machining time T by another interval optionally set in the machining path such as a predetermined distance or machining process defined as interval unit.

The machining time for each interval reaches a constant value in the interval as shown in Fig. 2(d). That is, the solid line and one dot chain line describe substantially the same locus in the machining interval $L_1$, thereby indicating that the machining time in case of the non-defectively machined work is equal to that of the machined work requiring the quality decision. Both the machining times describe different loci in the machining intervals $L_2$ to $L_4$. For example, the machining time in case of the machined work requiring the quality decision is longer than that in case of the non-defective work in the machining interval $L_2$, and the machining time in case of the machined work requiring the quality decision is shorter than that in case of the non-defective work in the machining interval $L_3$.

When the machining time T in Fig. 2(d) is used, the quality decision is made by comparing one cumulative machining time T in case of the non-defectively machined work with the other cumulative machining time T in case of the machined work requiring the quality decision. The comparison can be made at each interval defining the machining time T in the machining path.

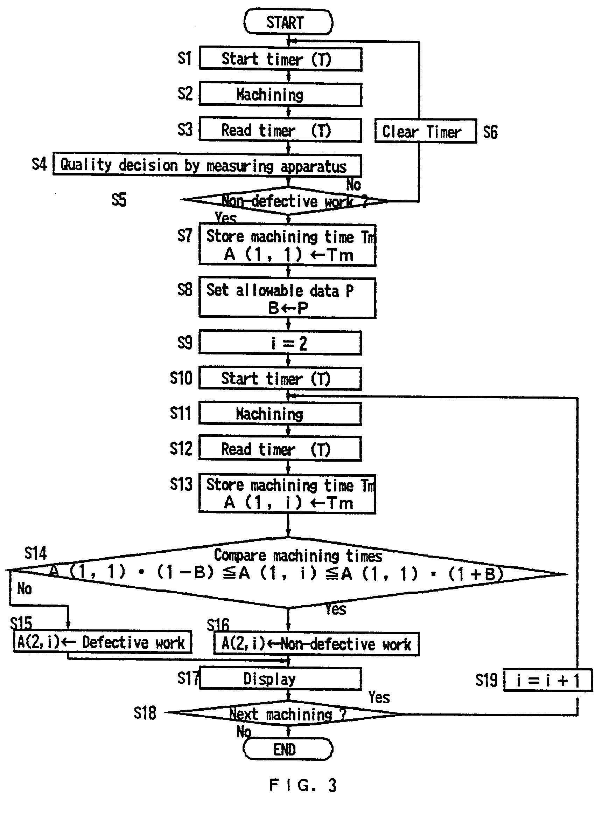

A description will now be given of procedure for the quality decision depending upon the machining time T referring to Fig. 3, i.e., a flowchart of the quality decision of the electrical discharge machined work according to one example of the present invention. In the following flowchart, a description is given by using reference numeral Step S.

In the quality decision of the electrical discharge machined work according to this example of the present invention, the process proceeds from Step S1 to Step S7 to find a machining time when a machined work is non-defective. Thereafter, the process proceeds from Step S8 to Step S19 to make the quality decision of the machined work on the basis of the machining time of the non-defective work found in the above process.

In Step S1, a timer is started to measure the machining time, thereby starting to count the machining time T. It is possible to employ, as the timer, a timer function built in the CPU 30 shown in Fig. 1. A start point of the timer can be set at, for example, a time point to start to drive the work table after electrical discharge machining has been prepared by turning ON a power source of the wire electrical discharge machining apparatus. It is possible to detect the start of drive of the work table by, for example, hardware means for detecting a rise of drive current for the servomotor to drive the work table, or by software means for monitoring a start command signal or a command signal from the CPU 40 to command drive and control of the servomotor.

In Step S2, when the timer is started, the work table of the electrical discharge machining apparatus is concurrently driven to start typical machining. At a machining end time, the count of the timer is stopped. The machining end time can be set at, for example, a time point to stop driving the work table. It is possible to detect the stop of drive of the work table by, for example, detecting a fall of the drive current for the servomotor to drive the work table, or monitoring a stop command signal or a command signal from the CPU 40 to command drive and control of the servomotor.

When a time is found at the machining end time in the cumulative machining time Ta shown in Fig. 2(c), it is sufficient to simply find a machining time, from the machining start point to the machining end point, required to machine one work. The machining time can be found by finding a time interval from the rise to the fall of the drive current for the servomotor to drive the work table, or by finding a time interval from the start command signal to the stop command signal from the CPU 40 to command the drive and control of the servomotor.

Alternatively, a machining time in the machining path can be found according to the cumulative machining time Ta shown in Fig. 2(c), and the time T shown in Fig. 2(d). In this case, it is sufficient to simply find a machining time required to machine one work in a predetermined interval by finding a time interval from one command signal to another command signal from the CPU 40 to command the drive and control of the servomotor, or by finding a time interval for each predetermined moving distance of the work table.

As one embodiment, a description will now be given of a case to find the machining time, from the machining start point to the machining end point, required to machine one work.

In Step S3, a value of the timer counted in the above process is read to use the timer value as the machining time T of the machined work.

In Step S4, each portion of the machined work formed according to the machining is measured by a measuring apparatus to provide the shape accuracy. Further, the quality decision is made by checking whether or not the shape accuracy is within a predetermined tolerance.

In Step S5, when the quality decision is made by the measuring apparatus to show that the machined work is non-defective, the process proceeds to the next Step S7 where the machining time is defined as a reference value. When the machined work is defective, the process returns to Step S1 after the timer is cleared in Step S6 so as to find the machining time in case of the non-defective work. Further, the process from Step S1 to Step S4 is repeated until a work is non-defectively machined.

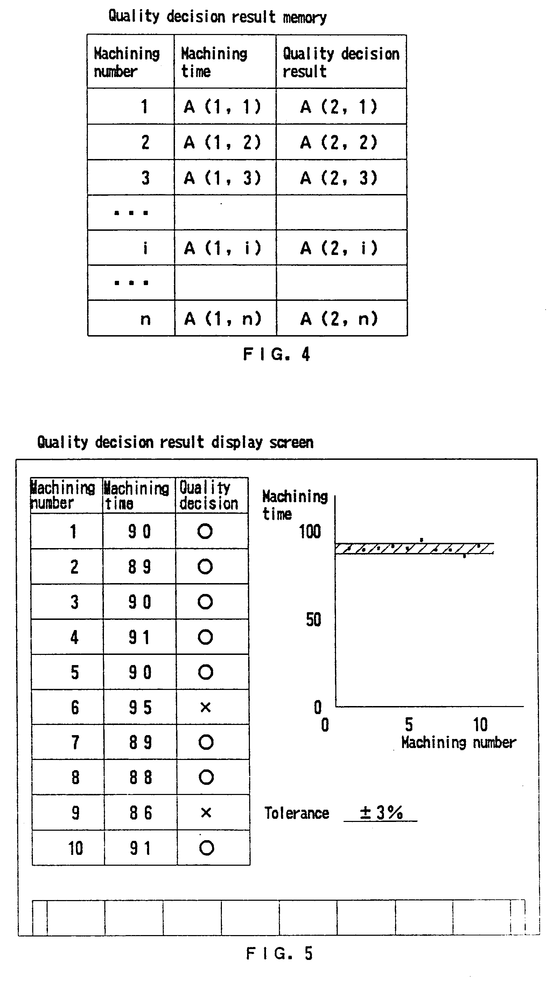

In Step S7, a machining time Tm required for the non-defectively machined work and found in the process from Step S1 to Step S6 is stored as A(1, 1) in a memory such as RAM 32. Fig. 4 is a schematic diagram for illustrating a structure of a quality decision result memory in which, for machining number i, a machining time A(1, i) and a quality decision result A(2, i) are stored. The quality decision result A(2, n) serves as a value to discriminate between the non-defective work and the defective work. For example, the value may be set to "1" in case of the non-defective work, or may be set to "0" in case of the defective work.

The memory contains, for machining number 1, a machining time A(1, 1) and a quality decision result A(2, 1) in case of the non-defective work which are found according to the process from Step S1 to Step S6. That is, the machining time A(1, 1) can serve as a machining time in case of the non-defective found in the above process, i.e., the reference value for the quality decision, and the quality decision result A(2, 1) can serve as a value indicating the non-defective work.

The machining time to machine one work from the machining start point to the machining end point is employed as an interval to make the quality decision. However, it is also possible to employ another machining time in a predetermined interval (with the number of intervals set to m) to machine one work. In this case, the machining numbers 1 to m are assigned to machining of the non-defective work, and machining times in the predetermined intervals are stored in the plurality of machining times A(1, 1) to A(1, m). Further, the quality decision results A(2, 1) to A(2, m) can serve as values indicating the non-defective work.

In Step S8, allowable data P is set to be used in the comparison with the reference values of the non-defective work so as to make the quality decision, thereafter defining the data P as an allowable value B. It is possible to employ, as the allowable value B, an allowable time value in a difference between the machining time of the non-defectively machined work and a machining time of a target machined work, or an allowable rate of the machining time of the target machined work with respect to the machining time of the non-defectively machined work.

In Step S9, in order to make the quality decision of the plurality of similarly machined works, an index i is set to correspond to the machined work requiring the quality decision so as to correspond to the machining member i in the quality decision result memory. First, the index i is set to "2" so as to specify the first machined work requiring the quality decision. The index i starts from "2" because the machining number "1" has already been specified to the non-defective work in Step S7.

In Step S10, the timer is started to measure the machining time of the machined work requiring the quality decision, thereby starting to count the machining time T. Since a structure of the timer and a driving operation of the timer are identical with those in Step S1, descriptions thereof are omitted.

In Step S11, at the same time that the timer is started, the work table of the electrical discharge machining apparatus is concurrently driven to start machining. The typical machining is made to the work requiring the quality decision, and the timer counting is stopped at the machining end point. In the process, since the timer is driven as in Step S2, a description thereof is omitted.

In Step S12, a value of the counter counted in the above process is read. The timer value is defined as the machining time T of the machined work.

In Step S13, the machining time Tm required to machine the machined work having the machining number i and found in the process from Step S10 to Step S12 is stored in the memory such as RAM 32 as the machining time A(1, 1) as shown in Fig. 4. As shown in Step S7, it is also possible to employ, as the interval to make the quality decision, the machining time in the predetermined interval (with the number of intervals set to m) to machine one work. In this case, the machining numbers 1 to m are assigned to machining of the non-defective work, and the machining times in the predetermined intervals are stored in the plurality of machining times A(1, 1) to A(1, m). This process is identical with the operation to store the machining time Tm of the non-defective work in Step S7.

In Step S14, the quality decision is made. In the quality decision operation, the machining time A(1, 1) in case of the non-defectively machined work found in the above process is set to a reference value for comparison, and the reference value is compared with the machining time A(1, i) of the machined work having the machining number i. That is, the machining times are compared by setting a tolerance between the machining times according to the allowable value B set in Step S8 so as to compare the machining time A(1, i) of the machined work requiring the quality decision with a boundary value of the tolerance. The comparison can be described by the following expression:

$$A(1, 1) \cdot (1 - B) \leqq A(1, i) \leqq A(1, 1) \cdot (1 + B) \qquad (1)$$

where the allowable value B shows a tolerance for the reference value of "1".

If the machining time A(1, i) of the machined work requiring the quality decision is within the tolerance described by the expression, the process proceeds to Step S15. If out of the tolerance, the process proceeds to Step S16.

In Step 15, if the machining time A(1, i) of the machined work requiring the quality decision is within the tolerance described by the expression (1), it is decided that the machined work is non-defective. Further, a value indicating the non-defective work is input into the quality decision result A(2, i) in the memory. For example, a value of "1" may be input as described before.

In Step S16, if the machining time A(1, i) of the machined work requiring the quality decision is out of the tolerance described by the expression (1), it is decided that the machined work is defective. Further, a value indicating the defective work is input into the quality decision result A(2, i) in the memory. For example, a value of "0" may be input as described before.

In Step S17, by using the value stored in the quality decision result memory, the result is displayed on a display screen of the CRT display unit 50. Fig. 5 is a diagram showing one embodiment of a quality decision result display screen of the quality decision of the electrical discharge machined work according to the present invention. The drawing includes a table and a graph illustrating the machining number, the machining time, and the quality decision in the quality decision result memory shown in Fig. 4. In the table showing the quality decision result, a circle mark denotes the non-defective work, and an X mark denotes the defective work. In the graph, the abscissa is defined as the machining number, and the ordinate is defined as the machining time. Further, the dot mark denotes the machining times to the respective machining numbers, and can concurrently show an area of the tolerance. In the illustrative display screen, the tolerance is set to ±3%. Values of the machining time are for purpose of illustration only.

In Steps S18, S19, it is decided whether or not a work having the next machining number should be machined. If the next machining is subsequently carried out, the index i is incremented by "1" in Step S19, and the process thereafter proceeds from Step S11 to Step S17.

Otherwise, if the next machining is not carried out, the process is terminated.

As set forth above, according to the flowchart, it is possible to find one machining time in the machining of the non-defective work so as to compare one machining time with the other machining time of the machined work requiring the quality decision, thereby making the quality decision and displaying the result thereof.

In the above embodiment, the quality decision is made by using the machining time from the machining start point to the machining end point, required to machine one work as the interval for the quality decision, and the result thereof is displayed. However, it is also possible to make the quality decision according to the machining time required to machine one work in a predetermined interval so as to display the result thereof.

Fig. 2(e) is a diagram in which a machining speed v is employed as time-dependent data in machining in the machining intervals $L_1$ to $L_4$ shown in Fig. 2(a). In the drawing, the machining speed v is taken in an ordinate. Further, the solid line shows the machining speed v when the machined work is non-defective, and one dot chain line shows the machining speed v of the machined work requiring the quality decision. In the drawing, the solid line and one dot chain line describe substantially the same locus in the machining interval $L_1$, thereby indicating that the cumulative machining time in case of the non-defectively machined work is equal to that in case of the machined work requiring the quality decision. On the other hand, the curves of both the cumulative machining times describe different loci in the machining intervals $L_2$ to $L_4$. For example, the machining speed of the machined work requiring the quality decision is slower than that of the non-defective work in the machining interval $L_2$, and the machining speed of the machined work requiring the quality decision is faster than that of the non-defective work in the machining interval $L_2$.

When the machining speed v in Fig. 2(e) is used, the quality decision is made by comparing the machining speed v in case of the non-defectively machined work with that of the machined work requiring the quality decision to check a difference therebetween. The comparison can be made at an optionally predetermined position in the machining path.

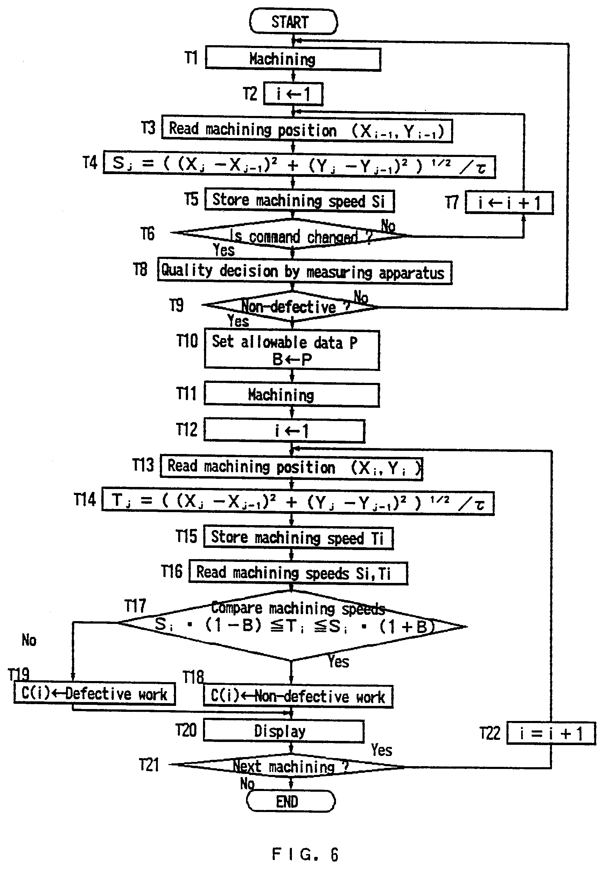

A description will now be given of procedure of the quality decision depending upon the machining speed v referring to Fig. 6. i.e., a flowchart of another example of quality decision of the electrical discharge machined work according to the present invention. In the following flowchart, a description is given by using reference numeral Step T.

In the quality decision of the electrical discharge machined work of this example of the present invention, when the machined work is non-defective, the machining speed in each machining path is found according to the process from Step T1 to Step T9. Thereafter, according to the process from Step T10 to Step T22, the quality decision of the machined work is made on the basis of the machining speed of the non-defective work found in the above process.

In the following flowchart, an interval corresponding to each machining command is used as an interval to compare the machining speed. A description will now be given of a case where the quality decision is made for each machining interval in one machined work.

In Step T1, the work table of the electrical discharge machining apparatus is driven to start typical machining.

In Step T2, the machining speed of the non-defective work serves as a reference value to be stored in the quality decision result memory, and a machining speed $S_i$, is set for each machining interval i. In order to find and store the machining speed $S_i$ for each machining interval, the machining interval i is initially set to "1".

In Step T3, a machining position $(X_{i-1}, T_{i-1})$ serving as a starting point in the machining interval i is found. The machining position $(X_{i-1}, T_{i-1})$ can be found depending upon, for example, a moving position of the work table.

In Step T4, a machining speed $S_i$ is subsequently found between the machining intervals i. It is possible to find the machining speed $S_i$ between, for example, the machining intervals i for each constant period. When the machining speed for each constant period is defined as $S_j$, the index i is used as a starting point of the machining speed $S_j$ for each constant period, and the value j is incremented from i for each constant period. Thus, the machining speed $S_i$ can be found by finding the machining speed $S_j$ described by the following expression:

$$S_j = ((X_j - X_{j-1})^2 + (Y_j - Y_{j-1})^2)^{1/2}/\tau \qquad (2)$$

where $(X_j, Y_j)$ shows a machining position after one constant period with respect to j, and $\tau$ meaning a time interval of the constant period.

The machining speed $S_i$ between the machining intervals i is selected from the machining speed $S_j$ found for each constant period to be defined as the machining speed $S_i$ in the machining interval i. When the machining speed $S_i$ is selected from the machining speed $S_j$, it is possible to employ, for example, a mean value or the maximum value of the machining speed $S_j$ found between the machining intervals i.

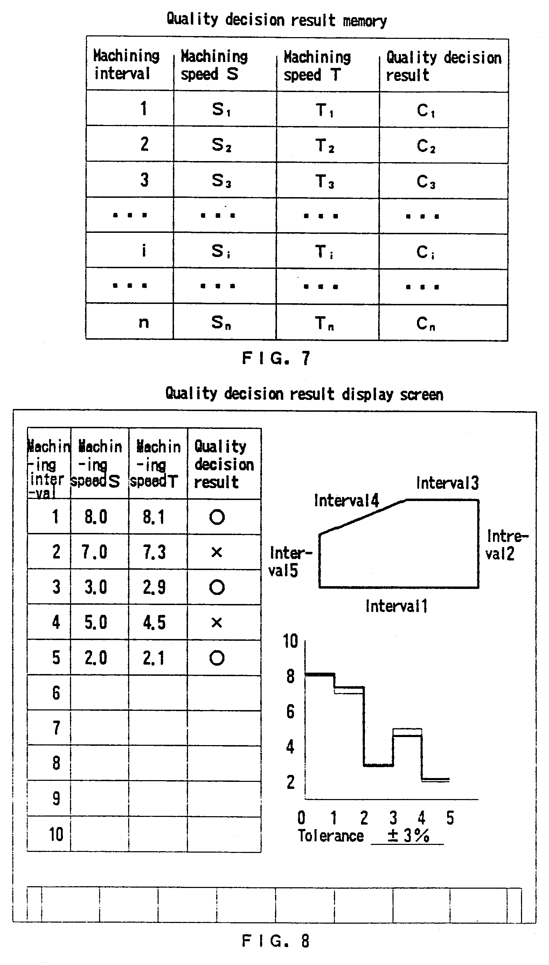

In Step T5, the machining speed $S_i$ in the machining interval i found in the above process is stored in the quality decision result memory built in the memory such as RAM 32. Fig. 7 is a schematic diagram for illustrating a structure of the quality decision result memory in which the machining speed $S_i$ of the non-defective work in the machining interval i, a machining speed $T_i$ of the machined work requiring the quality decision, and a quality decision result $C_i$ are stored. The quality decision result $C_i$ serves as a value to discriminate between the non-defective work and the defective work. For example, the value may be set to "1" in case of the non-defective work, and may be set to "0" in case of the defective work.

In the memory, a value in case of the non-defectively machined work found according to the process from Step T1 to Step T9 is stored as the machining speed $S_i$, to be used for the basis of the quality decision.

Though a description has been given of the quality decision made for each machining interval in one machined work, it is also possible to make the same quality decision for each machining interval in a plurality of machined works. In this case, the quality decision can be made by storing the above contents in the memory for each machined work.

In Step T6, it is monitored whether or not the machining interval is changed by deciding whether or not a machining command is changed. In Step T7, the index i is incremented by "1" to perform the machining of the next machining interval until the command is changed, resulting in repetition of the process from Step T4 to T5. When the command is changed, the process proceeds to Step T8. It can be monitored whether or not the command is changed by, for example, monitoring a command output from the CPU 40.

In Step T8, the measuring apparatus is used to measure each portion of the machined work which is formed according to the machining so as to find shape accuracy. Further, the measuring apparatus makes the quality decision by checking whether or not the shape accuracy is within a predetermined tolerance.

In Step T9, if it is decided that the machined work is non-defective according to the quality decision of the measuring apparatus, the machining speed is defined as a reference value for the quality decision of a target machined work, and the process thereafter proceeds to Step T10. If it is decided that the machined work is defective, the process returns to Step T1 so as to obtain another reference value again. Then, the process from Step T1 to Step T8 is repeated until the work is non-defectively machined.

In Step T10, allowable data P is set to be used in the comparison with the machining speed $S_i$, i. e., the reference values of the non-defective work so as to make the quality decision, thereafter defining the data P as an allowable value B. It is possible to employ, as the allowable value B, an allowable speed value in a difference between the machining time of the non-defectively machined work and that of a target machined work, or an allowable rate of a machining speed of the target machined work to that of the non-defectively machined work.

In Step T11, the work table of the electrical discharge machining apparatus is driven to start the machining so as to machine a target work requiring check.

In Step T12, the machining speed v of the target work requiring check is defined as the machining speed $S_i$ for each machining interval i. Further, the machining interval i is initially set to "1" so as to sequentially find and store the machining speed $S_i$ for each machining interval.

In Step T13, the machining position $(X_{i-1}, T_{i-1})$ serving as the starting point in the machining interval i is found. For each increment of the index i, the machining position $(X_{i-1}, T_{i-1})$ shows the starting position of the machining interval i corresponding to the index i. Further, the machining position $(X_{i-1}, T_{i-1})$ can be found depending upon, for example, a moving position of the work table.

In Step T14, a machining speed Ti between the machining intervals i is found by using the machining position value $(X_{i-1}, T_{i-1})$. It is possible to find the machining speed $T_i$ between, for example, the machining intervals i for each constant period. When the machining speed for each constant period is defined as $T_j$, the index i is used as a starting point of the machining speed $T_j$ for each constant period, and the value j is incremented from i for each constant period. Thus, the machining speed $T_i$ can be found by finding the machining speed $T_j$ described by the following expression:

$$T_j = ((X_j - X_{j-1})^2 + (Y_j - Y_{j-1})^2)^{1/2}/\tau \qquad (3)$$

where $(X_j, Y_j)$ shows a machining position after one constant period with respect to j, and $\tau$ meaning a time interval of the constant period.

The machining speed $T_i$ between the machining intervals i is selected from the machining speed $T_j$ found for each constant period to define the machining speed $T_i$ in the machining interval i. When the machining speed $T_i$ is selected from the machining speed $T_j$, it is possible to employ, for example, a mean value or the maximum value of the machining speed $T_j$ found between the machining intervals i as in the selection in Step T4.

In Step T15, the machining speed $T_i$ of the target machined work in the machining interval i found in the above process is stored in the quality decision result memory built in the memory such as RAM 32 as in the reference machining speed $S_i$ when the machined work is non-defective. The machining speed $T_i$ is stored in a column of machining interval i corresponding to that of the machining speed T in the quality decision result memory shown in Fig. 7. Further, in the following process, the machining speed $T_i$ is compared with the machining speed $S_i$ serving as the reference value in the same machining interval i.

When the machining speed $T_i$ is stored, a description has been given of the quality decision made for each machining interval in the machining path in one machined work. However, as described in Step T5, it is also possible to make the same quality decision for each machining interval in the plurality of machined works. In this case, the quality decision can be made by storing the above contents in the memory for each machined work.

In Step T16, the machining speed $S_i$ and the machining speed $T_i$ for each machining interval i are read out of the quality decision result memory. Thus, comparison can be made between the machining speed $S_i$ and the machining speed $T_i$ which are stored in the quality decision result memory in Step T5 and Step T15. It is possible to read out the machining speeds by, for example, the CPU 30 outputting a read-out command and an address to the RAM 32.

In Step T17, arithmetic means in the CPU 30 or the like can make the quality decision by using the machining speeds $S_i$ and the machining speeds $T_i$ which are read out in the above process. In the quality decision, the machining speed $S_i$ in case of the non-defective work found in the process from Steps T1 to T9 is defined as a reference value of comparison, and the reference value is compared with the machining speed $T_i$ of the machined work for each machining interval i. In the comparison of the machining speeds, a tolerance of the machining speed is set depending upon the allowable value B set in Step T10, and the comparison is made between the machining speed $T_i$ of the machined work requiring the quality decision and a boundary value of the tolerance. The comparison can be described by the following expression:

$$S_i \cdot (1 - B) \leqq T_i \leqq S_i \cdot (1 + B) \qquad (4)$$

where the allowable value B shows a tolerance for the reference value of "1".

If the machining speed $S_i$ of the machined work requiring the quality decision is within the tolerance described by the expression, the process proceeds to Step T18. If out of the tolerance, the process proceeds to Step T19.

In Step T18, if the machining speed $T_i$ of the machined work requiring the quality decision is within the tolerance described by the expression (4), it is decided that the shape accuracy in the machining interval i is within the tolerance, that is, the machined work is non-defective. Consequently, a value indicating the non-defective work is input into the quality decision result $C_i$ in the memory. For example, a value of "1" may be input as described before.

In Step T19, if the machining speed $T_i$ of the machined work requiring the quality decision is out of the tolerance described by the expression (4), it is decided that the shape accuracy in the machining interval i is out of the tolerance, that is, the machined work is defective. Consequently, a value indicating the defective work is input into the quality decision result $C_i$ in the memory. For example, a value of "0" may be input as described before.

In Step T20, by using the value stored in the quality decision result memory, the result is displayed on the display screen of the CRT display unit 50. Fig. 8 is a diagram showing another embodiment of the quality decision result display screen of the quality decision of the electrical discharge machined work according to the present invention. The drawing includes a table, a path diagram, and a graph illustrating the machining interval, the machining time S of the non-defective work, the machining time T of the target work requiring check and the quality decision in the quality decision result memory shown in Fig. 7. In the table showing the quality decision result, a circle mark denotes the non-defective work, and an X mark denotes the defective work. In the path diagram, the solid line shows the machining paths to illustrate the machining intervals therebetween. In the graph, the abscissa is defined as the machining interval, and the ordinate is defined as the machining time. Further, the narrow solid line shows the machining speed S in case of the non-defective work, and the thick solid line shows the machining time T in case of the target work requiring check.

In the illustrative display screen, a tolerance is set to ±3%. Further, values of the machining time are for purpose of illustration only.

In Steps T21, 22, it is decided whether or not the next machining interval is present. If the next machining interval is present, the index i is incremented by "1" in Step T22, and thereafter the next machining interval is machined according to the process from Step T13 to Step T20.

Otherwise, if the next interval is not present, that is, the machining is completed, the process is terminated.

As set forth above, according to the flowchart, it is possible to find one machining speed in the machining of the non-defective work so as to compare one machining speed with the other machining speed of the machined work requiring the quality decision, thereby making the quality decision and displaying the result thereof.

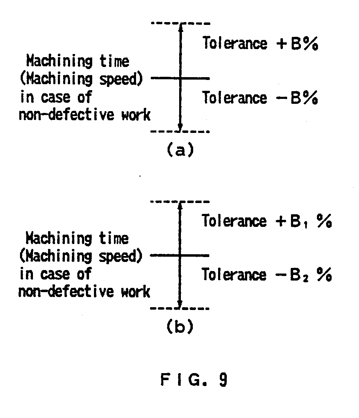

In the above embodiment, as shown in Fig. 9 (a) illustrating the tolerance, the tolerances B having the same magnitude are set in positive and negative directions with respect to the machining time in case of the non-defectively machined work or a reference value of the machining speed. However, as shown in Fig. 9(b), it is also possible to set tolerances B having different magnitude, for example, one tolerance $B_1$ in the positive direction and the other tolerance $B_2$ in the negative direction with respect to the reference value.

Further, it is also possible to set the tolerance for each machining interval. In this case, the tolerances corresponding to the machining intervals are stored in the memory such as RAM 32.

In the above embodiment, a description has been given of the quality decision made for each machined work having the same machined shape. However, it must be noted that the present invention may similarly be applied to a quality decision made for the same machining path in a plurality of machined works, or to another quality decision made for the same machining path in one machined work.

## Claims

1. A method of making a quality decision for a machined work formed by electrical discharge by a wire electrical discharge machining apparatus, characterised by the steps of:

   storing time-dependent machining data for a machined work which is non-defective;
   defining said time-dependent machining data as a parameter for the quality decision;
   monitoring, with respect to a machined work requiring the quality decision, the same time-dependent machining data as that stored for the non-defective work; and
   making the quality decision for the machined work by comparing the monitored time-dependent machining data for that work, with the stored time-dependent machining data for the non-defective work.

2. A method of making a quality decision for an electrical discharge machined work according to claim 1, wherein the time-dependent data comprises a machining time.

3. A method of making a quality decision for an electrical discharge machined work according to claim 1 or 2, wherein the time-dependent data comprises a machining speed.

4. A wire electrical discharge machining apparatus in combination with an apparatus for making a quality decision for a machined work formed by electrical discharge by the wire electrical discharge machining apparatus, the quality decision making apparatus being characterised by:

   storage means arranged to store time-dependent machining data for a non-defective work machined by the wire electrical discharge machining apparatus; and
   comparing means arranged to compare the time-dependent data stored in the storage means, with the same time-dependent machining data for the same machining of a work requiring a quality decision, said same time-dependent machining data being derived from machining performed on that work by the wire electrical discharge machining apparatus when the combination is in operation.

5. A combination according to claim 4, which is arranged to operate in such manner that when the combination is in operation, the time-dependent data will comprise a machining time.

**6.** A combination according to claim 4 or 5, which is arranged to operate in such manner that when the combination is in operation, the time-dependent data will comprise a machining speed.

**Patentansprüche**

**1.** Verfahren zum Entscheiden über die Qualität eines bearbeiteten Werkstücks, das durch elektrische Entladung mittels einer elektrischen Entladungsdrahtbearbeitungsvorrichtung gebildet ist, **gekennzeichnet** durch Schritte zum

Speichern zeitabhängiger Bearbeitungsdaten für ein bearbeitetes Werkstück, das nichtmangelhaft ist,
Definieren der zeitabhängigen Bearbeitungsdaten als einen Parameter für die Entscheidung über die Qualität,
Überwachen in bezug auf ein bearbeitetes Werkstück, das die Entscheidung über die Qualität erfordert, derselben zeitabhängigen Bearbeitungsdaten wie diejenigen, welche für das nichtmangelhafte Werkstück gespeichert sind, und
Durchführen der Entscheidung über die Qualität für das bearbeitete Werkstück durch Vergleichen der überwachten zeitabhängigen Bearbeitungsdaten für dieses Werkstück mit den gespeicherten zeitabhängigen Bearbeitungsdaten für das nichtmangelhafte Werkstück.

**2.** Verfahren zum Entscheiden über die Qualität eines mittels elektrischer Entladung bearbeiteten Werkstücks nach Anspruch 1, bei dem die zeitabhängigen Daten eine Bearbeitungszeit umfassen.

**3.** Verfahren zum Entscheiden über die Qualität eines mittels elektrischer Entladung bearbeiteten Werkstücks nach Anspruch 1 oder 2, bei dem die zeitabhängigen Daten eine Bearbeitungsgeschwindigkeit umfassen.

**4.** Elektrische Entladungsdrahtbearbeitungsvorrichtung in Kombination mit einer Vorrichtung zum Durchführen einer Entscheidung über die Qualität eines bearbeiteten Werkstücks, das durch elektrische Entladung mittels der elektrischen Entladungsdrahtbearbeitungsvorrichtung gebildet ist, wobei die Vorrichtung zum Durchführen einer Entscheidung über die Qualität **gekennzeichnet** ist durch

ein Speichermittel, das eingerichtet ist, zeitabhängige Bearbeitungsdaten für ein nichtmangelhaftes Werkstück, welches mittels der elektrischen Entladungsdrahtbearbeitungsvorrichtung bearbeitet ist, zu speichern, und
ein Vergleichsmittel, das eingerichtet ist, die zeitabhängigen Daten, welche in dem Speichermittel gespeichert sind, mit denselben zeitabhängigen Bearbeitungsdaten für dieselbe Bearbeitung eines Werkstücks, das eine Entscheidung über die Qualität erfordert, zu vergleichen, wobei dieselben zeitabhängigen Bearbeitungsdaten von der Bearbeitung abgeleitet werden, die mittels der elektrischen Entladungsdrahtbearbeitungsvorrichtung an dem Werkstück durchgeführt wird, wenn sich die Kombination in Betrieb befindet.

**5.** Kombination nach Anspruch 4, die eingerichtet ist, in einer Weise zu arbeiten, daß, wenn sich die Kombination in Betrieb befindet, die zeitabhängigen Daten eine Bearbeitungszeit umfassen werden.

**6.** Kombination nach Anspruch 4 oder 5, die eingerichtet ist, in einer Weise zu arbeiten, daß, wenn sich die Kombination in Betrieb befindet, die zeitabhängigen Daten eine Bearbeitungsgeschwindigkeit umfassen werden.

**Revendications**

**1.** Procédé pour la prise d'une décision concernant la qualité pour une pièce usinée obtenue par étincelage à l'aide d'un appareil d'usinage via étincelage par fil, caractérisé par les étapes consistant à:

mémoriser des données d'usinage en fonction du temps pour une pièce usinée qui est exempte de défauts;
définir lesdites données d'usinage en fonction du temps comme paramètre pour la décision concernant la qualité;
surveiller, par rapport à une pièce usinée nécessitant la décision concernant la qualité, les données d'usinage en fonction du temps identiques à celles mémorisées pour la pièce à usiner exempte de défauts; et
prendre la décision concernant la qualité pour la pièce usinée en comparant les données d'usinage en fonction du temps, surveillées pour cette pièce à usiner, avec les données d'usinage en fonction du temps, mémorisées pour la pièce à usiner exempte de défauts.

**2.** Procédé pour la prise d'une décision concernant la qualité pour une pièce à usiner obtenue par étincelage, selon la revendication 1, dans lequel les données en fonction du temps comprennent un temps d'usinage.

**3.** Procédé pour la prise d'une décision concernant la qualité pour une pièce à usiner obtenue par étincelage, selon la revendication 1 ou 2, dans lequel les données en fonction du temps comprennent une vitesse d'usinage.

4. Appareil d'usinage via étincelage par fil en combinaison avec un appareil pour prendre une décision concernant la qualité pour une pièce usinée obtenue par étincelage à l'aide d'un appareil d'usinage via étincelage par fil, l'appareil permettant de réaliser la prise de décision concernant la qualité étant caractérisé par;

un moyen de mise en mémoire arrangé pour mettre en mémoire les données d'usinage en fonction du temps pour une pièce à usiner exempte de défauts, obtenue à l'aide de l'appareil d'usinage via étincelage par fil; et
un moyen de comparaison arrangé pour comparer les données en fonction du temps, mémorisées dans le moyen de mémoire avec les mêmes données d'usinage en fonction du temps pour le même usinage d'une pièce à usiner nécessitant une décision concernant la qualité, lesdites mêmes données d'usinage en fonction du temps étant dérivées de l'usinage réalisé sur cette pièce à usiner à l'aide de l'appareil d'usinage via étincelage par fil lorsque la combinaison est mise en oeuvre.

5. Combinaison selon la revendication 4, qui est arrangée pour être mise en oeuvre de telle sorte que, lorsque la combinaison est activée, les données en fonction du temps comprendront un temps d'usinage.

6. Combinaison selon la revendication 4 ou 5, qui est arrangée pour être mise en oeuvre de telle sorte que, lorsque la combinaison est activée, les données en fonction du temps comprendront une vitesse d'usinage.

FIG. 1

F I G. 2

```
                    ( START )
                        │
              S1 │ Start timer (T) │◄──────────────┐
                        │                           │
              S2 │    Machining    │                │
                        │                           │
              S3 │  Read timer  (T) │    │ Clear Timer │ S6
                        │                           ▲
    S4 │ Quality decision by measuring apparatus │  │
                        │                     No    │
                        ▼                           │
        S5  ◄──── Non-defective work ? ────────────┘
                     Yes│
              S7 │ Store machining time Tm │
                 │   A (1, 1) ←Tm   │
                        │
              S8 │ Set allowable data P │
                 │       B←P        │
                        │
              S9 │      i = 2       │
                        │
             S10 │  Start timer (T) │
                        │
             S11 │    Machining    │◄──────────────┐
                        │                           │
             S12 │  Read timer  (T) │                │
                        │                           │
             S13 │ Store machining time Tm │          │
                 │   A (1, i) ←Tm   │                │
                        │                           │
    S14 ◄─ Compare machining times                  │
        A (1, 1) · (1−B) ≦ A (1, i) ≦ A (1, 1) · (1+B) ─┤
      No │                            Yes│          │
         ▼                               ▼          │
  S15 │ A(2,i)← Defective work │  S16 │ A(2,i)←Non-defective work │
         └──────────┐   ┌─────────────┘            │
                    ▼   ▼                           │
             S17 │    Display    │   S19 │ i = i + 1 │
                        │                     ▲     │
                        ▼                     │     │
        S18 ◄──── Next machining ? ───Yes─────┘     │
                     No│
                   ( END )
```

F I G. 3

Quality decision result memory

| Machining number | Machining time | Quality decision result |
|---|---|---|
| 1 | A (1, 1) | A (2, 1) |
| 2 | A (1, 2) | A (2, 2) |
| 3 | A (1, 3) | A (2, 3) |
| . . . | | |
| i | A (1, i) | A (2, i) |
| . . . | | |
| n | A (1, n) | A (2, n) |

F I G. 4

Quality decision result display screen

| Machining number | Machining time | Quality decision |
|---|---|---|
| 1 | 9 0 | O |
| 2 | 8 9 | O |
| 3 | 9 0 | O |
| 4 | 9 1 | O |
| 5 | 9 0 | O |
| 6 | 9 5 | × |
| 7 | 8 9 | O |
| 8 | 8 8 | O |
| 9 | 8 6 | × |
| 10 | 9 1 | O |

Machining time

100

50

0

0    5    10
Machining number

Tolerance   ± 3%

F I G. 5

START

T1 Machining

T2 $i \leftarrow 1$

T3 Read machining position $(X_{i-1}, Y_{i-1})$

T4 $S_j = ((X_j - X_{j-1})^2 + (Y_j - Y_{j-1})^2)^{1/2} / \tau$

T5 Store machining speed Si

T7 $i \leftarrow i + 1$

T6 Is command changed ? — No / Yes

T8 Quality decision by measuring apparatus

T9 Non-defective ? — No / Yes

T10 Set allowable data P
$B \leftarrow P$

T11 Machining

T12 $i \leftarrow 1$

T13 Read machining position $(X_i, Y_i)$

T14 $T_j = ((X_j - X_{j-1})^2 + (Y_j - Y_{j-1})^2)^{1/2} / \tau$

T15 Store machining speed Ti

T16 Read machining speeds Si, Ti

T17 Compare machining speeds
$S_i \cdot (1 - B) \leqq T_i \leqq S_i \cdot (1 + B)$

No / Yes

T19 $C(i) \leftarrow$ Defective work

T18 $C(i) \leftarrow$ Non-defective work

T20 Display

T22 $i = i + 1$

T21 Next machining ? — Yes / No

END

F I G. 6

Quality decision result memory

| Machining interval | Machining speed S | Machining speed T | Quality decision result |
|---|---|---|---|
| 1 | $S_1$ | $T_1$ | $C_1$ |
| 2 | $S_2$ | $T_2$ | $C_2$ |
| 3 | $S_3$ | $T_3$ | $C_3$ |
| . . . | . . . | . . . | . . . |
| i | $S_i$ | $T_i$ | $C_i$ |
| . . . | . . . | . . . | . . . |
| n | $S_n$ | $T_n$ | $C_n$ |

F I G. 7

Quality decision result display screen

| Machin-ing inter-val | Machin-ing speed S | Machin-ing speed T | Quality decision result |
|---|---|---|---|
| 1 | 8.0 | 8.1 | O |
| 2 | 7.0 | 7.3 | × |
| 3 | 3.0 | 2.9 | O |
| 4 | 5.0 | 4.5 | × |
| 5 | 2.0 | 2.1 | O |
| 6 | | | |
| 7 | | | |
| 8 | | | |
| 9 | | | |
| 10 | | | |

Interval4   Interval3

Inter-val5   Intreval2

Interval1

Tolerance ± 3%

F I G. 8

Machining time
(Machining speed)
in case of
non-defective work

Tolerance + B%

Tolerance − B%

(a)

Machining time
(Machining speed)
in case of
non-defective work

Tolerance + $B_1$ %

Tolerance − $B_2$ %

(b)

FIG. 9